# EUROPEAN PATENT SPECIFICATION

(11) **EP 1 310 422 B1**
(45) Date of publication and mention of the grant of the patent: **17.05.2006**
(21) Application number: 02079699.1
(22) Date of filing: 08.11.2002
(51) Int. Cl.: B62D 49/00, B62D 49/02, B62D 53/04, A01D 87/00, A01B 51/04

(54) **Tractor provided with a frame having support means and an arm**
Traktor mit Stützelemente und Hebearm besitzendem Anbaurahmen
Tracteur avec cadre muni d'éléments supports et d'un bras élévateur

(30) Priority: 09.11.2001 NL 1019339
(43) Date of publication of application: 14.05.2003
(73) Proprietor: Mechanisatie Haarlemmermeer B.V., 2131 LV Hoofddorp (NL)
(72) Inventor: Bergsma, Bauke Doeke, 2131 LV Hoofddorp (NL)
(74) Representative: Bartelds, Erik

(56) References cited:
- EP-A- 1 052 214
- AT-B- 298 336
- FR-A- 2 318 806
- US-A- 2 427 301
- US-A- 3 006 489

## Description

The invention relates to a combination of a vehicle, in particular a tractor, and at least one frame connected thereto and bearing at least one arm, the at least one frame being arranged on an end of the tractor and being provided with support means, the support means comprising at least one wheel axle that is pivotable about at least one axis.

Such a combination of tractor and frame according to the preamble of claim 1 is known, e.g. from US-A-3,006,489. This prior art document discloses a tractor having a frame connected to the outside of its rear axle. The frame extends substantially parallel to the tractor, and has freely pivotable support wheels at the front and the rear. The frame carries an arm which is pivotable about a transverse axis, so that the arm may pick up bales of straw in front of the tractor and transfer these to a trailer on the rear of the tractor through an arc-like pivoting movement.

From US-A-2,427,301 a tractor is known having a lifting frame at the front. The lifting frame is supported by freely pivotable caster wheels, and carries a vertically movable fork.

FR-A-2 318 806 discloses the combination of a tractor and an elevator and conveyor. The elevator is supported by freely pivotable wheels and is connected to the tractor in the way of a trailer. For transport the elevator may be lowered into a support that is attached to the front of the tractor.

In AT-A-298 336 a lifting device is disclosed for connection to the front of a tractor. This lifting device does not include wheels, but has fixed supports for placing it on the ground.

Finally, various combinations of tractors and arm-carrying frames are known for use in the maintenance of ditches and verges. Depending on the application, different devices can herein be fixed to the arm(s), such as for instance mowing machines, hedge trimmers and the like.

In a known variant a tractor is provided with an arm which is directly suspended from a three-point lifting installation available at the front or rear of any conventional tractor. This arrangement has the drawback that the permissible weight of the arm is limited by the maximum lifting capacity of the installation. When work is carried out adjacently of the tractor, this arrangement also results in considerable torsional loads in the chassis of the tractor, which also imposes limitations on the weight and the outreach of the arm. Furthermore, when the arm is fixed to the rear lifting installation it is not easy for the driver of the tractor to monitor the operation of the arm and the equipment mounted thereon, as these will be situated behind him during use.

Another known tractor is provided with an attached frame from which the arm extends. The frame can herein be fixed on a side as well as on the front or rear end of the tractor. The arm can extend in lateral direction as well as in forward or rearward direction. This construction results in a large tilting moment about the longitudinal axis (in the case of a frame extension mounted on a side), or about the transverse axis (in the case of a frame extension at the front or rear) of the tractor, whereby the maximum outreach of the arm is limited. A relatively heavy frame is moreover required for this purpose which engages round the frame of the tractor, whereby the tractor is limited in its further possible uses.

The invention now has for its object to improve a combination of tractor and arm of the above described type such that the stated drawbacks no longer occur. According to the invention this is achieved in that the at least one wheel axle is pivotable and steerable about a vertical axis. Through the use of one or more wheel axles, loads resulting from the weight of the frame and the arm(s), as well as loads resulting from operations carried out by the arm(s), are transferred directly into the ground, whereby the chassis of the tractor is loaded considerably less heavily. Compaction of the ground as a result of the load of the frame and the arm(s) can be minimized by a suitable choice of wheel size and tyre pressure. Moreover, by making the wheel axle(s) steerable, the combination is easy to manoeuvre. Finally, due to the disposition at one end, therefore in the proximity of the longitudinal axis of the tractor, the arm will exert a smaller tilting moment on the tractor. In this manner the operation of the arm(s) can also be readily observed by the driver.

In most situations the frame will be arranged on the front end of the tractor. However, when the tractor has drive placing means, i.e. steering and controlling elements which can be moved to another position in order to drive the tractor in forward or rearward direction as desired, the frame with the arm(s) can also be mounted on the rear of the tractor.

The at least one wheel axle can herein be independently steerable, although it also possible to envisage the axle following the movements of the tractor.

In addition, the wheel axle can be pivotable about the longitudinal axis of the tractor, whereby the wheels can follow unevennesses in the ground.

To be continued on page 3, line 9 of original description.

In order to increase stability, the at least one wheel axle can have an adjustable track width.

When the tractor comprises a front axle and a rear axle, the frame is preferably connected to the tractor between the front axle and rear axle. In this manner the chassis of the tractor is under less torsional load when the arm is extended. Furthermore, the frame is advantageously connected pivotally to the tractor, whereby the torsional load, particularly on the part of the chassis directed toward the frame, is limited even further.

The at least one frame preferably has secondary support means for setting down thereof on the ground. The frame can thus be embodied as so-called "drive-in" frame, behind or in front of which the tractor can be quickly placed by simply driving it into the frame.

Advantageously the width of the at least one frame is at most equal to that of the tractor, whereby it is possible to drive closely past obstacles without risk during operations.

The invention also relates to a frame having support means and bearing at least one arm, which frame is intended for use in a combination as described above. The or each arm is herein advantageously arranged pivotally on the frame.

The invention is now elucidated on the basis of an embodiment, wherein reference is made to the annexed drawing, in which:

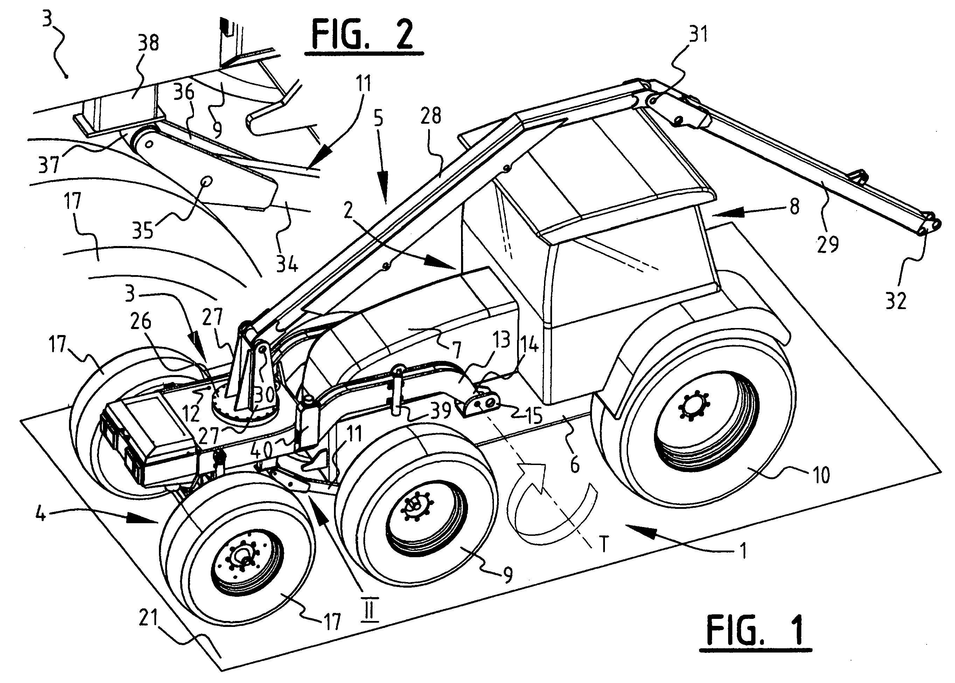

Fig. 1 shows a perspective view of a combination of tractor and frame with support means according to the invention, wherein the arm is shown in a folded-down transporting position,
Fig. 2 is a detail view according to arrow II in fig. 1, and
Fig. 3 is a partly cross-sectional perspective view of the frame with primary and secondary support means in the set-down position.

A combination 1 according to the invention comprises a vehicle 2, in the shown embodiment a tractor, and a frame 3 having (primary) support means 4 and bearing an arm 5 movable in many directions.

Tractor 2 is of conventional construction and has a chassis 6 (shown here schematically) supporting a motor and transmission covered by a hood 7, as well as a cab 8. The chassis is carried by an undercarriage consisting of a steerable front axle with relatively small wheels 9 and a rigid rear axle with larger wheels 10. Tractor 2 is provided at the rear (not shown) and at the front with a three-point lifting device 11.

Frame 3 is U-shaped in top view and comprises a base part 12 on which an arm 5 is mounted, and two jaws 13 extending on either side of chassis 6 of tractor 2. These jaws 13 are mounted with their ends 14 on supports 15 connected to tractor chassis 6 for pivoting about a transverse axis T. In this manner less torsional loads are transmitted from frame 3 to tractor chassis 6.

During use the base part 12 of frame 3 is supported by support means 4. These support means 4 here take the form of a rigid axle 16 which bears on both sides a wheel 17 which is connected to the axle by means of a stub axle 18, and is thus pivotable. In the shown embodiment the wheels 17 can be steered by means of steering cylinders 19 which will follow steering movements of the front wheels 9 of tractor 2. Use can be made for this purpose of sensors for sensing this movement, for instance simple potentiometers. It is of course also possible to envisage embodying the wheels 17 of frame 3 in freely pivotable manner, whereby they will follow passively the movement of tractor 2.

Axle 16 is hingedly suspended from a pin 20, so that wheels 17 can readily follow unevenness in the ground 21. In the shown embodiment cylinders 22 are also arranged on either side between axle 16 and frame 3, whereby axle 16 can be placed at a desired angle relative to frame 3, for instance to compensate loads resulting from the arm 5 reaching far to the side. Axle 16 could optionally be given a telescopic form, whereby the track width can be adjusted to the length and outreach of the used arm 5.

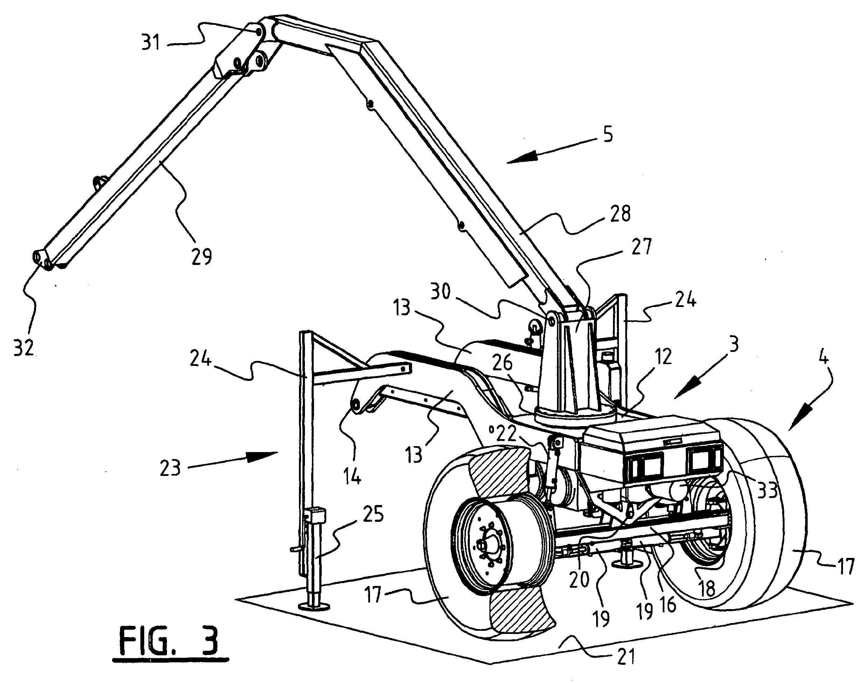

To frame 3 can also be connected secondary support means 23, here in the form of legs 24 which are releasably connected to jaws 13 and which can each be adjusted in height close to their underside by means of a jack 25. With these secondary support means 23 in combination with wheels 17 of (primary) support means 4, frame 3 can be set down in stable manner when it is not in use (fig. 3). For use the tractor 2 then only has to be driven between jaws 13, whereafter the different hydraulic, electrical and mechanical connections can be effected, legs 24 can be removed and tractor 2 can drive away with frame 3. For the hydraulic and electrical connections use can be made of rapid-action couplings and plugs. The mechanical connections consist on the one hand of pins which are placed through openings in the ends 14 of jaws 13 and supports 15, and on the other of a rapid-action coupling with which the front power take-off (P.T.O.), not shown here, of tractor 2 is connected drivingly to a shaft on frame 3. This shaft in turn drives a hydraulic pump 33 with which pressure is generated in a hydraulic system on frame 3, which is used for instance to drive tools for fixing on arm 5. This hydraulic system comprises among other things a tank 40 for the hydraulic fluid.

The arm 5 is pivotally mounted on the base part 12 of frame 3 by means of a turntable 26. This turntable 26 is driven by a motor (not shown here). Arm 5 is formed by a post 27 mounted on turntable 26 and a number of (in this embodiment two) segments 28, 29 pivotally connected to each other by horizontal shafts 30, 31. The movements of segments 28, 29 relative to each other and to post 27 are provided by hydraulic cylinders or motors (not shown here) which are fed by the pump 33 on frame 3 or by the hydraulic system of tractor 2, and are controlled from the cab 8 of tractor 2. On the free end 32 of the outermost segment 29 can be fixed different tools, for instance so-called straw chopper type mowers or hedge trimmers in various widths. Segments 28, 29 of arm 5 can otherwise be exchangeable, whereby arms can be formed of different lengths.

During use of combination 1 the arm 5 can be placed in any desired position by rotating the turntable 26 and pivoting about shafts 30, 31, so as to reach locations where operations must be carried out, for instance mowing a verge or cutting a hedge. Arm 5 herein has a working range of about 300 degrees, to either side and to the front of tractor 2. This is particularly practical for mowing for instance a central reservation of a motorway. During this rotation the driver at all times retains a good view of arm 5 from cab 8.

When the operations are finished, the combination 1 can be made suitable for transport on the road in simple manner. For this purpose the arm 5 is pivoted to the rear, until it comes to rest on a support (not shown here) on the rear side of tractor 2. Combination 1 hereby becomes very compact and falls within the standards of the Ministry of Transport. Frame 3 is then pivoted upward about axis T by moving the lifting device 11 upward, whereby wheels 17 are moved clear of the ground 21 and tractor 2 can travel at high speed. For this purpose the lifting device 11 has arms 34 which are each provided with an end part 36 with a roller 37 pivotable about a shaft 35, which roller engages under a support 38 of frame 3.

Frame 3 is further provided with a stabilizing cylinder 39, the plunger of which can be fixed to the front axle of tractor 2 by means of for instance a hitch, so as to form an extra connection between frame 3 and the tractor in order to compensate moments resulting from the sideways movement of arm 5.

Frame 3 can be used in combination with different types of tractor, with varying dimensions and power. The power as well as the weight of the tractor must of course be chosen to some extent in accordance with the weight and dimensions of frame 3 and arm 5, so as to obtain a stable and efficiently operating combination.

By making use of a frame with its own means for supporting thereof on the ground, which is moreover pivotally connected to the tractor, the loads on the tractor result from the weight and the moment of the arm are minimized. The load on the ground is furthermore distributed over a greater area by the extra support means, whereby the ground pressure is thus decreased and possible compaction takes place to a lesser extent.

Although the invention is elucidated above with reference to one embodiment, this could be varied in many ways. The frame could thus have a different form or different dimensions, and could be fixed between the axles of the tractor in a different manner. Different support means could also be used, for instance rollers or caterpillars, while these could also be distributed over more than one axle. The manner of controlling the support means, the form and dimensions of the arm and the manner of driving the different components could also be modified. The secondary support means could further be foldable instead of detachable, or could even be omitted completely. In the latter case the frame could then support in the rest position on the end of the arm. Finally, other types of vehicles than tractors, for instance shovels and the like, could also be used in combination with the frame.

The scope of the invention is therefore defined solely by the appended claims.

## Claims

1. Combination (1) of a vehicle (2), in particular a tractor, and at least one frame (3) connected thereto and bearing at least one arm (5), the at least one frame (5) being arranged on an end of the tractor (2) and being provided with support means (4), the support means (4) comprising at least one wheel axle (16) that is pivotable about at least one axis, **characterized in that** the at least one wheel axle (16) is pivotable and steerable about a vertical axis.

2. Combination (1) as claimed in claim 1, **characterized in that** the at least one wheel axle (16) is independently steerable.

3. Combination(1) as claimed in claim 1, **characterized in that** the tractor (2) has steerable front wheels (9) and the at least one wheel axle (16) is arranged to follow steering movements of the front wheels (9) of the tractor (2).

4. Combination (1) as claimed in any of the foregoing claims, **characterized in that** the at least one wheel axle (16) is pivotable about a longitudinal axis (20).

5. Combination (1) as claimed in any of the foregoing claims, **characterized in that** the at least one wheel axle (16) has an adjustable track width.

6. Combination (1) as claimed in any of the foregoing claims, **characterized in that** the tractor (2) comprises a front axle and a rear axle, and that the at least one frame (3) is connected to the tractor (2) between the front axle and rear axle.

7. Combination (1) as claimed in any of the foregoing claims, **characterized in that** the at least one frame (3) is connected pivotally to the tractor (2).

8. Combination (1) as claimed in any of the foregoing claims, **characterized in that** the at least one frame (3) has secondary support means (23) for setting down thereof on the ground.

9. Combination (1) as claimed in any of the foregoing claims, **characterized in that** the width of the at least one frame (3) is at most equal to that of the tractor (2).

10. Frame (3) having support means (4) and bearing at least one arm (5), evidently intended for use in a combination (1) as claimed in any of the foregoing claims.

11. Frame (3) with support means (4) as claimed in claim 10, **characterized in that** the or each arm (5) is arranged pivotally on the frame (3).

## Patentansprüche

1. Kombination (1) aus einem Fahrzeug (2), insbesondere einem Traktor, und zumindest einem Rahmen (3), der mit diesem verbunden ist und zumindest einen Arm (5) trägt, wobei der zumindest eine Rahmen (5) an einem Ende des Traktors (2) angeordnet ist und mit Abstützmitteln (4) versehen ist und die Abstützmittel (4) zumindest eine Radachse (16) aufweisen, welche zumindest um eine Achse schwenkbar ist, **dadurch gekennzeichnet, dass** die zumindest eine Radachse (16) um eine vertikale Achse schwenkbar und steuerbar ist.

2. Kombination (1) gemäß Anspruch 1, **dadurch gekennzeichnet, dass** die zumindest eine Radachse (16) unabhängig steuerbar ist.

3. Kombination (1) gemäß Anspruch 1, **dadurch gekennzeichnet, dass** der Traktor (2) lenkbare Vorderräder (9) aufweist und dass die zumindest eine Radachse (16) so angeordnet ist, dass sie den Bewegungen der Vorderräder (9) des Traktors (2) folgt.

4. Kombination (1) gemäß einem der vorangegangenen Ansprüche, **dadurch gekennzeichnet, dass** die zumindest eine Radachse (16) um eine Längsachse (20) schwenkbar ist.

5. Kombination (1) gemäß einem der vorangegangenen Ansprüche, **dadurch gekennzeichnet, dass** die zumindest eine Radachse (16) eine einstellbare Spurweite aufweist.

6. Kombination (1) gemäß einem der vorangegangenen Ansprüche, **dadurch gekennzeichnet, dass** der Traktor (2) eine Vorderachse und eine Hinterachse aufweist und dass der zumindest eine Rahmen (3) zwischen der Vorderachse und der Hinterachse mit dem Traktor (2) verbunden ist.

7. Kombination (1) gemäß einem der vorangegangenen Ansprüche, **dadurch gekennzeichnet, dass** der zumindest eine Rahmen (3) schwenkbar mit dem Traktor (2) verbunden ist.

8. Kombination (1) gemäß einem der vorangegangenen Ansprüche, **dadurch gekennzeichnet, dass** der zumindest eine Rahmen (3) Neben-Abstützmittel (23) aufweist, die auf dem Boden absetzbar sind.

9. Kombination (1) gemäß einem der vorangegangenen Ansprüche, **dadurch gekennzeichnet, dass** die Breite des zumindest einen Rahmens (3) maximal gleich der Breite des Traktors (2) ist.

10. Rahmen (3), der Abstützmittel (4) aufweist und zumindest einen Arm (5) trägt, und der offensichtlich zur Verwendung in einer Kombination (1) vorgesehen ist, wie sie in einem der vorangegangenen Ansprüche beansprucht ist.

11. Rahmen (3) mit Abstützmitteln (4) gemäß Anspruch 10, **dadurch gekennzeichnet, dass** der oder jeder Arm (5) schwenkbar an dem Rahmen (3) angeordnet ist.

## Revendications

1. Combinaison (1) d'un véhicule (2), en particulier d'un tracteur, et d'au moins un cadre (3) raccordé à celui-ci et portant au moins un bras (5), le au moins un cadre (5) étant agencé sur une extrémité du tracteur (2) et étant pourvu de moyens de support (4), les moyens de support (4) comprenant au moins un essieu de roues (16) qui peut pivoter autour d'au moins un axe, **caractérisée en ce que** le au moins un essieu de roue (16) peut pivoter et être dirigé autour d'un axe vertical.

2. Combinaison (1) selon la revendication 1, **caractérisée en ce que** le au moins un essieu de roues (16) peut être dirigé de façon indépendante.

3. Combinaison (1) selon la revendication 1, **caractérisée en ce que** le tracteur (2) possède des roues avants dirigeables (9) et le au moins un essieu de roues (16) est agencé pour suivre les mouvements de direction des roues avants (9) du tracteur (2).

4. Combinaison (1) selon l'une quelconque des revendications précédentes, **caractérisée en ce que** le au moins un essieu de roues (16) peut pivoter autour d'un axe longitudinal (20).

5. Combinaison (1) selon l'une quelconque des revendications précédentes, **caractérisée en ce que** le au moins un essieu de roues (16) présente une largeur de voie réglable.

6. Combinaison (1) selon l'une quelconque des revendications précédentes, **caractérisée en ce que** le tracteur (2) comprend un essieu avant et un essieu arrière, et **en ce que** le au moins un cadre (3) est raccordé au tracteur (2) entre l'essieu avant et l'essieu arrière.

7. Combinaison (1) selon l'une quelconque des revendications précédentes, **caractérisée en ce que** le au moins un cadre (3) est raccordé de manière pivotante au tracteur (2).

8. Combinaison (1) selon l'une quelconque des revendications précédentes, **caractérisée en ce que** le au moins un cadre (3) présente des moyens de support secondaires (23) destinés à le déposer sur le sol.

9. Combinaison (1) selon l'une quelconque des revendications précédentes, **caractérisée en ce que** la largeur du au moins un cadre (3) est au plus égale à celle du tracteur (2).

10. Cadre (3) présentant des moyens de support (4) et supportant au moins un bras (5), apparemment destiné à être utilisé dans une combinaison (1) selon l'une quelconque des revendications précédentes.

11. Cadre (3) comprenant des moyens de support (4) selon la revendication 10, **caractérisé en ce que** le ou chacun des bras (5) est agencé de façon pivotante sur le cadre (3).
